Europäisches Patentamt

European Patent Office

Office européen des brevets

(19)

(11) Numéro de publication: **0 278 833 B1**

(12) # FASCICULE DE BREVET EUROPEEN

(45) Date de publication du fascicule du brevet:
**23.05.90**

(51) Int. Cl.⁵: **F02C 9/38, F02C 9/28**

(21) Numéro de dépôt: **88400169.4**

(22) Date de dépôt: **27.01.88**

(54) **Sous-ensemble modulaire de régulation à détecteur de perte de charge et limiteur de survitesse intégrés.**

(30) Priorité: **28.01.87 FR 8700975**

(43) Date de publication de la demande:
**17.08.88 Bulletin 88/33**

(45) Mention de la délivrance du brevet:
**23.05.90 Bulletin 90/21**

(84) Etats contractants désignés:
**DE FR GB**

(56) Documents cités:
**EP-A- 0 107 940**
**FR-A- 1 134 891**
**FR-A- 1 144 275**
**FR-A- 2 067 745**
**FR-A- 2 528 495**
**GB-A- 790 007**
**US-A- 3 173 468**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Brocard, Jean-Marie, 7, allée des Bégonias, F-77950 Rubelles(FR)**
Inventeur: **Perrodeau, Eric, 5, rue de la Bièvre, F-92340 Bourg la Reine(FR)**
Inventeur: **Vernochet, Maurice Georges, 22, rue Dajot, F-77000 Melun(FR)**

(74) Mandataire: **Moinat, François et al, S.N.E.C.M.A. Service des Brevets Boîte Postale 81, F-91003 Evry Cédex(FR)**

## Description

La présente invention concerne un sous-ensemble modulaire de régulation à détecteur de perte de charge et limiteur de survitesse intégrés pour turbomachines.

On sait que les régulateurs de carburant pour turbomachines comprennent généralement, un doseur de débit dont l'amont est relié à la sortie d'une pompe volumétrique et l'aval à un circuit d'injection, une soupape régulatrice placée en dérivation entre la pompe et le doseur, un détecteur de perte de charge destiné à fournir une sortie à pression modulée Pmod fonction de la perte de charge Pam-Pav où Pam et Pav sont les pressions mesurées en amont et en aval du doseur, la sortie Pmod agissant sur la soupape régulatrice pour ouvrir ou fermer celle-ci quand la perte de charge aux bornes du doseur varie afin de maintenir celle-ci constante, un limiteur de survitesse apte à prendre en compte la vitesse de rotation de la turbomachine pour laquelle un seuil de survitesse est fixé de façon à diminuer le débit d'injection dans l'installation utilisatrice lorsque ce seuil est dépassé afin d'éviter un emballement éventuel de la turbomachine, et enfin un clapet d'arrêt capable d'arrêter sur commande le débit du carburant injecté dans la turbomachine, les organes précités étant commandés au moyen d'un calculateur de régulation.

Dans les régulations classiques, les fonctions de détection de perte de charge et de limitation de survitesse sont réalisées séparément au moyen d'amplificateurs hydrauliques indépendants constitués par un tiroir tournant pour le détecteur de perte de charge et une servo-valve du type buse-palette pour la limitation de survitesse. A celà est ajouté un dispositif complémentaire destiné à ouvrir la soupape régulatrice pour éviter une explosion du régulateur au moment de la fermeture du clapet d'arrêt. En effet, à ce moment là la soupape régulatrice a normalement tendance à se fermer, elle aussi, alors qu'il faut l'ouvrir largement pour dériver le débit de carburant refoulé par la pompe haute pression volumétrique.

La présente invention a pour but d'intégrer dans un même sous-ensemble modulaire les fonctions de détection de la perte de charge du doseur, de commande de la soupape régulatrice, de commande d'arrêt et de limitation de survitesse, ceci afin d'améliorer la fiabilité du système de régulation en soumettant un amplificateur hydraulique unique connu pour sa fiabilité, par exemple du type tiroir tournant, à des forces générées par la perte de charge du doseur, par une pression tout ou rien de commande d'arrêt et par un système à masselottes à effet progressif pour agir sur la soupape régulatrice.

Pour améliorer encore la sécurité de ce sous-ensemble regroupant ces fonctions, l'invention prévoit également de pouvoir en tester le fonctionnement lorsque l'avion qui comporte ce type de régulation est au sol, au moyen d'une simulation de survitesse qui permettra de vérifier que le tiroir du détecteur de perte de charge se comporte normalement sous l'action du limiteur de survitesse.

L'invention a donc pour objet un sous-ensemble modulaire de régulation comprenant un détecteur de perte de charge et un limiteur de survitesse à masselottes pour un ensemble de régulation de turbomachines où le sous-ensemble est associé à un doseur de débit dont l'entrée est reliée au côté refoulement d'une pompe haute pression volumétrique délivrant du carburant à une pression Pam et dont la sortie débite le carburant à une pression Pav vers un circuit d'injection, les variations des pressions Pam et Pav étant détectées par le détecteur de perte de charge apte, sous l'action d'un fluide de travail à pression Pam, à délivrer en sortie ce fluide à une pression Pmod, fonction de la perte de charge Pam-Pav, vers une soupape régulatrice apte à réagir sur le débit du carburant pour maintenir constante cette perte de charge, le limiteur de survitesse étant apte à détecter la vitesse de rotation de la turbomachine qui l'entraine et à diminuer, sous l'action d'un fluide de travail, le débit de carburant délivré au circuit d'injection en réponse à un dépassement d'un seuil de survitesse prédéterminé.

Selon une caractéristique importante de l'invention, le détecteur de perte de charge est constitué par un tiroir mobile axialement dans un alésage d'un carter et le limiteur de survitesse est disposé co-axialement dans ledit carter en bout de l'alésage contenant le tiroir du détecteur qu'il entraîne en rotation par une fourchette et sur lequel il est apte, lors du dépassement du seuil de survitesse, à agir dans la même direction que lors d'une détection d'une augmentation de la perte de charge par le détecteur pour diminuer la pression Pmod en sortie dudit détecteur et ouvrir la soupape régulatrice.

Selon une particularité de construction du sous-ensemble de l'invention, le tiroir du détecteur de perte de charge est équilibré hydrauliquement au repos entre deux chambres d'extrémité, une première chambre d'extrémité comprenant le ressort de butée et une seconde chambre d'extrémité dans laquelle sont disposés le support des masselottes du limiteur de survitesse et l'organe d'entraînement en rotation du tiroir du détecteur de perte de charge, l'équilibre hydraulique étant réalisé par mise à la basse pression Pca desdites chambres d'extrémité par un canal axial du tiroir débouchant de part en part et relié par des canaux radiaux à la seconde chambre de travail et à une chambre intermédiaire soumise à la basse pression Pca.

Le limiteur de survitesse, quant à lui, est constitué par une douille disposée dans un alésage coaxial au tiroir du détecteur de perte de charge, ladite douille supportant d'une part un engrenage entraîné en rotation par l'arbre de la turbomachine et d'autre part un support de masselottes disposé dans la seconde chambre d'extrémité du détecteur de perte de charge et comportant une fourchette d'entrainement en rotation du tiroir du détecteur de perte de charge, les leviers des masselottes actionnant le déplacement d'une coupelle coulissant dans un alésage de la douille, face à l'extrémité du tiroir du détecteur de perte de charge.

D'autres particularités de l'invention seront précisées dans le complément de description qui va suivre, accompagné de planches de dessins parmi lesquelles :

- La figure 1 est un schéma synoptique d'une régulation intégrant le sous ensemble selon l'invention;
Dans cette figure, les liaisons hydrauliques ont été représentées en traits pleins, les liaisons mécaniques en traits interrompus courts et les liaisons électriques en traits interrompus longs.
- La figure 2 en montre un mode de réalisation pratique.
- La figure 3 montre à plus grande échelle, le sous-ensemble modulaire selon l'invention.

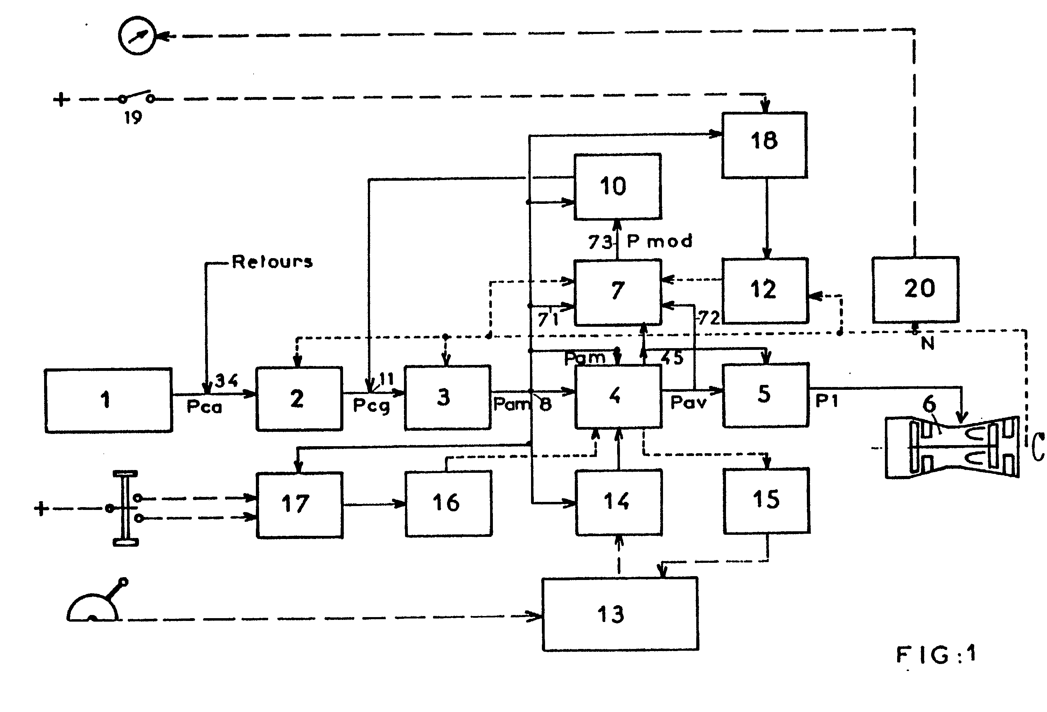

A la figure 1 est représenté le schéma d'organisation d'une régulation de carburant de turbomachine selon l'invention. L'installation comporte une pompe haute pression 3 alimentée en carburant depuis le réservoir 1 par une pompe basse pression centrifuge 2. La pompe 3 est volumétrique et fournit un débit de carburant proportionnel au régime de la turbomachine à un doseur 4 qui, au travers d'un clapet 5, appelé par la suite clapet d'arrêt, alimente le circuit d'injection principale de carburant d'une chambre de combustion d'une turbomachine 6.

Un détecteur de perte de charge 7 reçoit sur deux tubulures d'entrée 71 et 72 les informations des pressions Pam, prélevée en un point 8 situé entre la pompe HP3 et le doseur 4, et Pav, en aval du doseur, et, sous l'action de carburant à la pression Pam prélevé au point 8, fournit sur sa tubulure de sortie 73 une pression Pmod qui commande l'ouverture ou la fermeture d'une soupape régulatrice 10 dont l'entrée est reliée au point 8 à pression Pam et dont la sortie est ramenée à un point 11 situé sur la tubulure reliant la pompe basse pression 2 et la pompe haute pression 3.

Le rôle de la soupape régulatrice 10 est, en réponse à la détection d'une variation de la perte de charge aux bornes du doseur égale à la différence Pam-Pav, de dériver l'excédent de carburant qui se trouve entre la pompe HP 3 et le doseur 4 afin de maintenir constante la perte de charge dans le doseur, ce qui constitue une condition pour que le débit de carburant fourni aux injecteurs, lequel est proportionnel à la section de passage du doseur et à la racine carrée de la perte de charge, ne soit plus fonction que des déplacements du piston doseur.

Un limiteur de survitesse 12 recevant pour information d'entrée la vitesse de rotation N de la turbomachine qui l'entraîne en rotation est appelé à diminuer le débit dans le circuit d'injection de la turbomachine 6 lorsqu'un seuil de survitesse est atteint afin de maintenir le système à une vitesse tolérable. Pour ce faire, le limiteur de survitesse comporte une douille disposée dans un alésage coaxial au tiroir du détecteur de perte de charge 7 qu'il entraîne en rotation et sur lequel il est apte, lors d'un dépassement du seuil de survitesse, à agir dans la même direction que lors d'une détection d'une augmentation de la perte de charge par le détecteur 7 pour diminuer la pression Pmod en sortie dudit détecteur, ce qui a pour effet d'ouvrir rapidement la soupape régulatrice 10, et donc de réduire le débit dans l'installation réceptrice 6, empêchant ainsi le régime d'augmenter encore et évitant la destruction de la turbomachine.

Le doseur 4 constitué par un piston différentiel est commandé en translation par un calculateur de régulation 13 qui agit sur une (ou des) servo-valve(s) 14 permettant de modifier les pressions dans les chambres de commande dudit piston, tandis que la position du doseur est mesurée par un (ou des) capteur(s) de déplacement 15 qui transmet(tent) l'information de position au calculateur 13.

Le déplacement du doseur vers sa position de débit minimal est limité par une butée de sécurité antidévissage 16 qui peut être effacée par action sur un électrorobinet 17 pour permettre au doseur 4 de prendre une position de fermeture ou de débit de sortie nul, position dans laquelle une chambre annulaire du doseur permet d'amener au clapet d'arrêt une pression de commande Pam prélevée au point 8, de commander ainsi la fermeture dudit clapet d'arrêt 5 et d'interrompre le circuit d'injection.

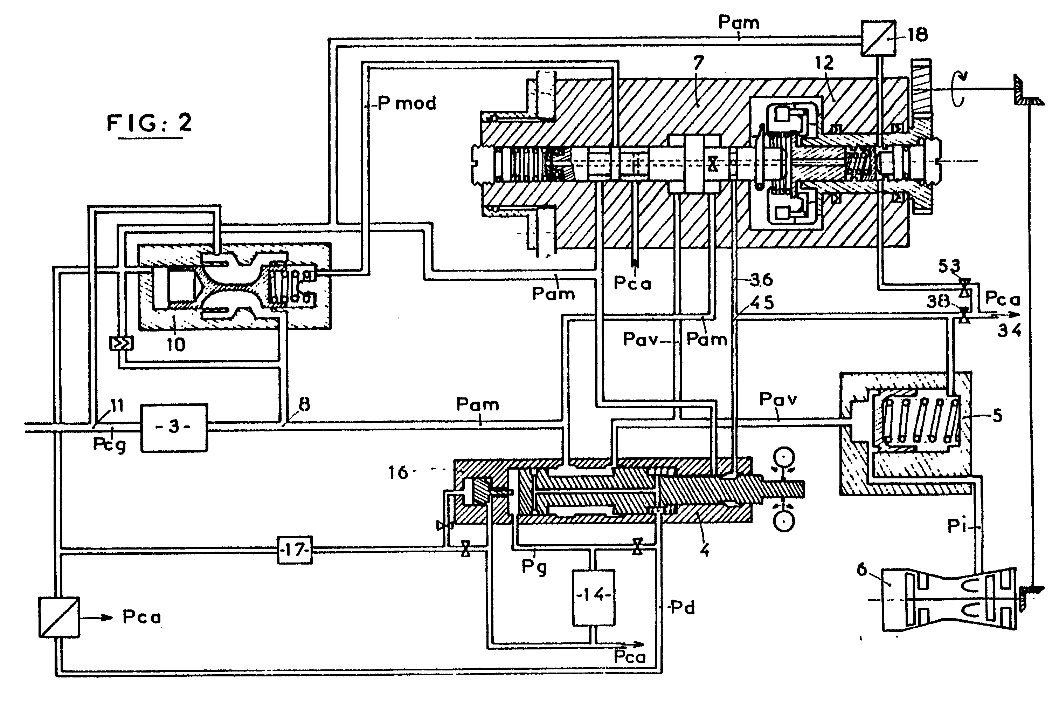

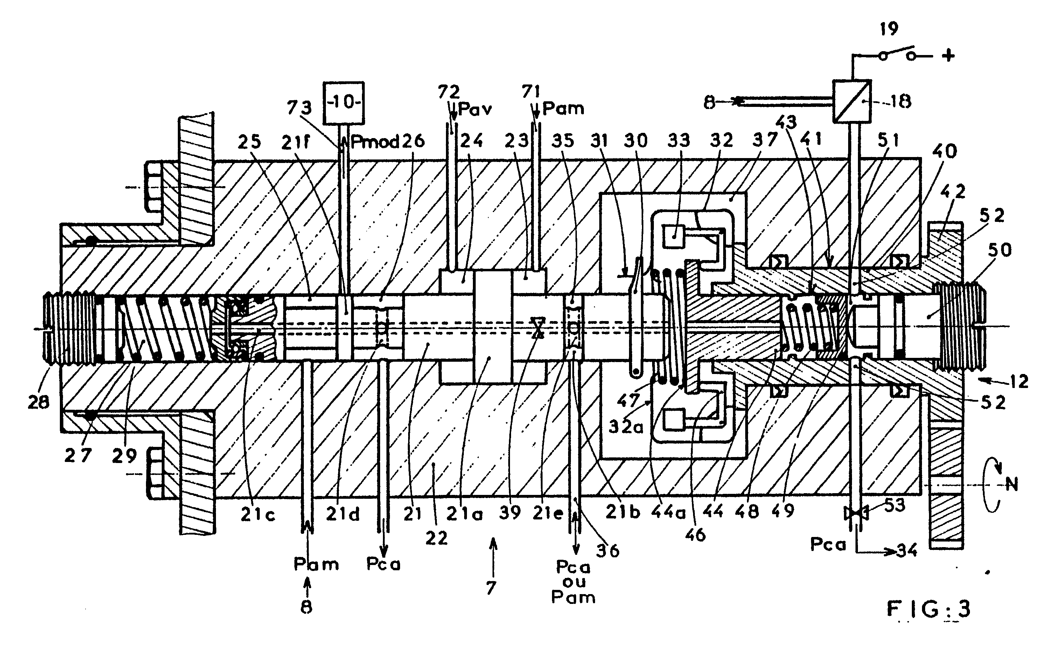

Cette description synoptique étant effectuée, on se reportera aux figures 2 et 3 pour la suite de la description dans laquelle les éléments identiques sont représentés par les mêmes repères chiffrés.

En se référant plus particulièrement à la figure 3, on voit que le détecteur de perte de charge 7 est constitué par un tiroir 21 mobile en translation et en rotation dans un alésage d'un carter 22 comportant un piston 21a délimitant avec le carter 22 deux chambres de commande respectivement l'une 23 à la pression Pam et l'autre 24 à la pression Pav et deux chambres de travail, l'une 25 à la pression Pam et l'autre 26 en communication avec la basse pression Pca, séparées par un épaulement 21f apte par ses déplacements en translation à mettre en communication une ouverture de sortie 73 soit avec la première chambre de travail 25 à pression Pam, soit avec la seconde chambre de travail 26 à pression Pca pour réaliser la pression de sortie Pmod, en réponse à une diminution, respectivement une augmentation de la perte de charge Pam-Pav, le déplacement du tiroir 21 lors d'une augmentation de la perte de charge s'effectuant à l'encontre d'une butée élastique comprenant un ressort 27 réglable par une vis 28, le ressort étant disposé dans une première chambre d'extrémité 29 située sur la gauche de la figure 3.

Le tiroir 21 est entraîné en rotation au moyen d'un système - doigt 30, fourchette 31 -, la fourchette 31 étant portée par le support 32 de masselottes 33 du limiteur de survitesse 12, ledit support étant disposé dans une seconde chambre d'extrémité 37 du détecteur de perte de charge.

Entre la chambre de commande 23 contenant du carburant à la haute pression Pam et la seconde chambre d'extrémité 37, le tiroir 21 comporte un chambrage annulaire 21b qui forme avec le carter 22 une chambre intermédiaire 35 reliée par un conduit 36 d'une part à un retour à la basse pression Pca vers le point 34 situé en amont de la pompe 2 (voir figure 1 également) au travers d'un diaphragme 38, et d'autre part à la sortie 45 du tiroir du doseur qui peut être mise à la haute pression Pam, lors de la commande du doseur vers une position de débit de sortie nul.

Un canal axial 21c traversant de part en part le tiroir 21 et des conduits radiaux 21d,21e débouchant respectivement dans les chambres 26 et 35 permet, en l'absence de la haute pression Pam dans la chambre 35, d'équilibrer hydrauliquement le tiroir 21 de sorte que seules les variations de Pam et Pav, et donc de la perte de charge Pam-Pav, commandent les déplacements du tiroir 21. En revanche, en présence de la pression Pam dans la chambre 35, un diaphragme 39 situé entre les chambres 26 et 35 empêche le carburant à pression Pam de pénétrer dans la chambre 26, tandis qu'il en autorise le passage vers la seconde chambre d'extrémité 37 pour assurer le déplacement vers la gauche du tiroir 21.

Le limiteur de survitesse comporte une douille 40 disposée dans un alésage 41 coaxial au tiroir 21 et situé de l'autre côté de la seconde chambre d'extrémité 37. La douille 40 est entrainée en rotation par un engrenage 42 lui même entrainé par une démultiplication par la turbomachine de façon à ce que la douille 40 tourne à une vitesse proportionnelle à la vitesse N de la turbomachine.

La douille 40 est percée d'un alésage 43 dans lequel peut coulisser une coupelle 44 sous l'action des leviers 46 des masselottes 33 qui agissent à l'encontre d'un premier ressort 47 disposé entre le fond 32a du support de masselottes et une portée 44a de la coupelle 44 tandis qu'un second ressort 48 est disposé dans l'alésage 43 entre la coupelle 44 et un piston 49 dont la course est limitée sur la droite de la figure 3 par une butée à vis 50 assurant la fermeture étanche de l'ensemble et permettant le réglage du seuil de survitesse.

Entre la douille 40, le piston 4g et la butée 50, l'espace libre forme une chambre 51 dite chambre de commande en test qui, au travers de trous radiaux 52 de la douille 40 est mise en communication d'une part avec la basse pression Pca du point 34 (voir figure 1) au travers d'un diaphragme 53 et d'autre part de façon temporaire à la haute pression Pam du point 8 au moyen d'un électrorobinet 18 commandé par un interrupteur 19, (voir aussi figure 1) afin de permettre de tester le déplacement du piston 49, de la coupelle 44 et du tiroir 21.

Le fonctionnement du sous-ensemble modulaire selon l'invention est le suivant :

Lors du fonctionnement de la turbomachine, celle-ci entraine en rotation la douille 40 par son engrenage 42, la rotation de la douille entrainant celle du tiroir 21 au moyen de la fourchette 31 et du doigt 30 solidaire du tiroir 21.

Dans les conditions normales de fonctionnement les chambres 26,29,35,37 et 51 sont soumises à la basse pression Pca, l'électrorobinet 18 de commande en test étant fermé et la position du tiroir du doseur 4, limitée par la butée 16, n'autorisant pas le passage de la pression Pam vers le clapet d'arrêt 5 et vers la chambre intermédiaire 35 du tiroir du détecteur de perte de charge 7 via la tubulure de commande d'arrêt 45.

Dans ce cas, le tiroir 21 est équilibré hydrauliquement puisque la basse pression Pca règne dans ses chambres d'extrémité 29 et 37.

Le détecteur de perte de charge 7 reçoit par les tubulures 71 et 72 les informations de pression en amont du doseur Pam et en aval Pav. Lorsque la perte de charge Pam-Pav augmente (respectivement diminue) le tiroir 21 se déplace vers la gauche (resp. vers la droite) et l'épaulement 21f tend à démasquer plus ou moins la tubulure de sortie 73 de sorte que la pression Pmod diminue (resp. augmente).

Cette pression Pmod étant fournie à la chambre de commande de la soupape régulatrice 10 et agissant sur la soupape à l'encontre de la haute pression Pam, lorsque Pmod diminue la soupape 10 s'ouvre et permet de by-passer une partie du carburant prélevé au point 8 en amont du doseur pour le recycler au point 11 en amont de la pompe HP 3.

Lorsque le régime approche du seuil de survitesse préréglé par le positionnement de la butée 50, la coupelle 44 se déplace d'abord librement vers la gauche sous l'action centrifuge des masselottes 33. Lorsque le seuil de survitesse est atteint, la coupelle 44 arrive au contact du tiroir 21. Quand le régime dépasse le seuil, la coupelle 44 pousse le tiroir 21 vers la gauche. Cette action mécanique sur le tiroir entraîne le déplacement vers la gauche de l'épaulement 21f qui met la sortie 73 en communication avec la chambre 26 à la basse pression Pca et ainsi diminue la pression Pmod, ce qui a pour effet d'ouvrir la soupape régulatrice 10, donc de diminuer le débit qui traverse le doseur 4 pour être injecté dans le système d'injection et de limiter la survitesse de la turbomachine.

Par ailleurs, lorsque le pilote désire arrêter la turbomachine, il lui faut à la fois ouvrir l'électrorobinet 17 commandant l'effacement de la butée antidévissage 16 et agir sur la manette des gaz commandant au doseur 4 de se fermer par l'intermédiaire du calculateur 13 pour arrêter le débit de carburant injecté. Le tiroir du doseur 4 se déplace alors complètement vers la gauche, permettant l'arrivée de la haute pression Pam dans la tubulure 45 de commande d'arrêt qui d'une part actionne le clapet d'arrêt 5 dans le sens de sa fermeture et d'autre part met la tubulure 36 et la chambre intermédiaire 35 à la haute pression Pam.

Ainsi la haute pression Pam, par l'intermédiaire du canal radial 21e et de la partie droite du canal axial 21c, s'établit jusqu'aux diaphragmes 38 et 39 dans la chambre 37 et pousse le tiroir 21 sur la gauche, ce qui a ici encore pour effet de diminuer Pmod, d'ouvrir la soupape régulatrice 10, et finalement de dériver le débit en amont du doseur 4.

Lorsque la turbomachine s'arrête ou lorsque l'ordre d'arrêt est supprimé, la haute pression qui s'était établie dans la chambre 37 s'évacue vers la basse pression Pca en 34 par les diaphragmes 38 et 39 et le tiroir 21 se repositionne vers la droite.

Pour tester au sol le fonctionnement du sous ensemble détecteur de perte de charge et limiteur de survitesse combinés, on amène momentanément la haute pression Pam dans la chambre 51 par ouverture de l'électrorobinet 18. La chambre 51 est alors isolée de la basse pression par le diaphragme 53 et cette surpression à l'intérieur de la douille 40 pousse le piston 49 vers la gauche et abaisse le réglage normal du seuil de survitesse. Il est alors possible au pilote, en mettant la manette des gaz au plein gaz maxi, de faire fonctionner le limiteur de survitesse comme ci-dessus pour le contrôler. Il doit en effet vérifier que le régime ne dépasse pas, dans ces conditions, une valeur prédéfinie inférieure au régime maxi normalement autorisé.

Ce sous-ensemble, de structure très simple, utilisant un amplificateur hydraulique à tiroir tournant dont la fiabilité est reconnue, permet de rassembler en un seul organe hydraulique, modulaire et fiable, un détecteur de perte de charge, un limiteur de survitesse et une commande d'ouverture de la soupape régulatrice liée à la commande d'arrêt du débit de carburant injecté.

En y intégrant une fonction de commande en test au sol, on améliore encore la sécurité du sous-ensemble de régulation.

**Revendications**

1. Sous-ensemble modulaire de régulation comprenant un détecteur de perte de charge et un limiteur de survitesse à masselottes pour un ensemble de régulation de turbomachines où le sous-ensemble est associé à un doseur de débit (4) dont l'entrée est reliée au côté refoulement d'une pompe haute pression volumétrique (3) délivrant du carburant à une pression Pam et dont la sortie débite le carburant à une pression Pav vers un circuit d'injection (6), le détecteur de perte de charge (7) étant apte à détecter les variations des pressions Pam et Pav et, sous l'action d'un fluide de travail à pression Pam, à délivrer en sortie ce fluide à une pression Pmod, fonction de la perte de charge Pam-Pav, vers une soupape régulatrice (10) apte à réagir sur le débit du carburant pour maintenir constante cette perte de charge, le limiteur de survitesse (12) étant apte à détecter la vitesse de rotation de la turbomachine qui l'entraîne et à diminuer, sous l'action d'un fluide de travail, le débit de carburant délivré au circuit d'injection (6) en réponse à un dépassement d'un seuil de survitesse prédéterminé, caractérisé en ce que le détecteur de perte de charge est constitué par un tiroir (21) mobile axialement dans un alésage d'un carter (22) et en ce que le limiteur de survitesse (12) est disposé co-axialement dans ledit carter en bout de l'alésage contenant le tiroir (21) du détecteur (7) qu'il entraîne en rotation par une fourchette (31) et sur lequel il est apte, lors du dépassement du seuil de survitesse, à agir dans la même direction que lors d'une détection d'une augmentation de la perte de charge par le détecteur pour diminuer la pression Pmod en sortie dudit détecteur (7) et ouvrir la soupape régulatrice (10).

2. Sous-ensemble de régulation selon la revendication 1 caractérisé en ce que le détecteur de perte de charge (7) est constitué par un tiroir (21) mobile en translation et en rotation dans un alésage d'un carter (22) comportant un piston 21a délimitant avec le carter 22 deux chambres de commande respectivement l'une (23) à la pression Pam et l'autre (24) à la pression Pav et deux chambres de travail, l'une (25) à la pression Pam et l'autre (26) en communication avec la basse pression Pca, séparées par un épaulement (21f), lui-même apte par ses déplacements en translation à mettre en communication une ouverture de sortie (73) soit avec la première chambre de travail (25) à pression Pam, soit avec la seconde chambre de travail (26) à pression Pca pour réaliser la pression de sortie Pmod, en réponse à une diminution, respectivement une augmentation de la perte de charge Pam-Pav, le déplacement du tiroir lors d'une augmentation de la perte de charge s'effectuant à l'encontre d'une butée élastique à ressort (27) réglable par vis (28).

3. Sous-ensemble de régulation selon la revendication 2, caractérisé en ce qu'au repos, le tiroir (21) est équilibré hydrauliquement entre deux chambres d'extrémité (29,37), une première chambre d'extrémité (29) comprenant le ressort (27) de butée et une seconde chambre d'extrémité (37) dans laquelle sont disposés le support (32) des masselottes (33) du limiteur de survitesse et l'organe d'entraînement en rotation (30,31) du tiroir du détecteur de perte de charge, l'équilibre hydraulique étant réalisé par mise à la basse pression Pca desdites chambres d'extrémité (29,37) par un canal axial (21c) du tiroir (21) débouchant de part en part et relié par des canaux radiaux (21d, 21e) à la seconde chambre de travail (26) et à une chambre intermédiaire (35) soumise à la basse pression Pca.

4. Sous-ensemble de régulation selon la revendication 3 pour ensemble de régulation dont le doseur (4) est solidaire d'un tiroir autorisant l'envoi d'une haute pression Pam dans une tubulure de sortie (45), lorsque le doseur prend sa position de débit de sortie nul, sous-ensemble caractérisé en ce que ladite tubulure de sortie (45) est reliée à la chambre intermédiaire (35) du tiroir du détecteur de perte de charge, un diaphragme (39) étant disposé dans le canal axial (21c) du tiroir (21) entre la seconde chambre de travail (26) et la chambre intermédiaire (35) de telle sorte que ladite chambre intermédiaire soit soumise à la haute pression Pam lors de la fermeture du doseur (4), et que le tiroir (21) soit entraîné en translation vers une position où la pression Pmod est diminuée et ouvre la soupape régulatrice (10).

5. Sous-ensemble de régulation selon l'une quelconque des revendications 3 ou 4, caractérérisé en ce que le limiteur de survitesse est constitué par une douille (40) disposée dans un alésage (41) coaxial au tiroir (21) du détecteur de perte de charge, ladite douille supportant d'une part un engrenage (42) entraîné en rotation par l'arbre de la turbomachine et d'autre part un suppoort (32) de masselottes (33) disposé dans la seconde chambre d'extrémité (37) du détecteur de perte de charge et comportant une fourchette (31) d'entrainement en rotation du tiroir (21) du détecteur de perte de charge, les leviers (46) des masselottes (33) actionnant le déplacement d'une coupelle (44) coulissant dans un alésage de la douille (40), face à extrémité du tiroir (21) du détecteur de perte de charge.

6. Sous-ensemble de régulation suivant la revendication 5, caractérisé en ce que en dessous du seuil de survitesse la coupelle (44) du limiteur de survitesse est en position d'équilibre dans l'alésage de la douille (40) entre, d'une part un premier ressort (47) antagoniste à l'action des masselottes, ledit premier ressort étant disposé entre le support (32a) du masselotte et une portée (44a) de la coupelle, et d'autre part un second ressort (48) disposé entre ladite coupelle et un piston (49) dont la course est limitée par une butée de réglage à vis (50) et en ce que, lorsque le seuil de survitesse est atteint, le déplacement de la coupelle (44) est tel que celle-ci prend appui sur le tiroir (21) du détecteur de perte de charge et le pousse dans le sens d'une diminution de la pression Pmod afin d'ouvrir la soupape régulatrice et de limiter la survitesse.

7. Sous-ensemble de régulation selon la revendication 6, caractérisé en ce qu'une chambre (51), dite chambre de commande en test est constituée entre la douille (40), le piston (49) et la butée (50) du limiteur de survitesse, ladite chambre de commande en test étant reliée à la basse pression au travers d'un diaphragme (53) et en ce qu'une conduite pouvant être alimentée en fluide à haute pression au travers d'un électrorobinet (18) débouche dans ladite chambre pour l'alimenter momentanément en fluide à pression Pam et modifier les forces agissant sur l'équilibre axial de la coupelle (44) afin de déplacer axialement ladite coupelle pour, au delà d'un régime préfixé inférieur au régime maxi normalement autorisé, amener ladite coupelle à déplacer également le tiroir 21 du détecteur de perte de charge.

## Patentansprüche

1. Modulare Regleruntereinheit mit einem Druckverlustdetektor und einem Fliehkraft-Drehzahlbegrenzer für eine Reglereinheit für Turbomaschinen, bei der die Reglereinheit einem Kraftstoffmengen-Dosierer (4) zugeordnet ist, dessen Eingang mit der Förderseite einer volumetrischen Hochdruckpumpe (3) verbunden ist, die Kraftstoff mit einem Druck Pam liefert, und dessen Ausgang Kraftstoff mit dem Druck Pav an einen Einspritzkreis abgibt, wobei der Druckverlustdetektor (7) die Änderungen der Drücke Pam und Pav erfassen und unter der Einwirkung eines Arbeitsfluids mit dem Druck Pam dieses Fluid an seinem Ausgang mit einem Druck Pmod, der eine Funktion des Druckverlustes Pam-Pav ist, an ein Regelventil (10) abgeben kann, das auf den Kraftstoff-Durchsatz anspricht, um den genannten Druckverlust konstant zu halten, wobei der Drehzahlbegrenzer (12) die Drehgeschwindigkeit der ihn antreibenden Turbomaschine erfassen und unter der Einwirkung eines Arbeitsfluids die an den Einspritzkreis (6) abgegebene Kraftstoffmenge in Abhängigkeit von einem Überschreiten eines vorbestimmten Drehzahlschwellenwerts verringern kann, dadurch gekennzeichnet, daß der Druckverlustdetektor von einem in einer Bohrung eines Gehäuses (22) axial bewegbaren Schieber (21) gebildet ist und daß der Drehzahlbegrenzer (12) koaxial in diesem Gehäuse am Ende der Bohrung angeordnet ist, die den Schieber (21) des Druckverlustdetektors (7) enthält, den er über einen Bügel mit einer Drehbewegung beaufschlagt und auf den er bei dem Überschreiten des Drehzahlschwellenwerts in derselben Richtung einwirken kann wie bei der Erfassung einer Erhöhung des Druckverlusts durch den Druckverlustdetektor (7), um den Druck Pmod am Ausgang des Druckverlustdetektors zu verringern und das Regelventil (10) zu öffnen.

2. Regleruntereinheit nach Anspruch 1, dadurch gekennzeichnet, daß der Druckverlustdetektor (7) aus einem Schieber (21) besteht, der in einer Bohrung des Gehäuses (22) in Translationsrichtung und in Drehrichtung bewegbar ist, wobei diese Bohrung einen Kolben (21a) enthält, der mit dem Gehäuse (22) zwei Steuerkammern begrenzt, von denen ·in einer (23) der Druck Pam und in der anderen (24) der Druck Pav herrscht, sowie zwei Arbeitskammern, von denen in einer (25) der Druck Pam herrscht und deren andere (26) mit dem niedrigen Druck Pca verbunden ist, wobei die beiden Arbeitskammern (25 und 26) durch eine Schulter (21f) voneinander getrennt sind, die ihrerseits durch ihre Translationsbewegungen eine Ausgangsöffnung (73) entweder mit der ersten Arbeitskammer (25) mit dem Druck Pam oder mit der zweiten Arbeitskammer (26) in Verbindung setzen kann, um in Abhängigkeit von einer Verringerung bzw. einer Erhöhung des Druckverlusts Pam-Pav den Ausgangsdruck Pmod herzustellen, wobei die Verschiebung des Schiebers bei einer Erhöhung des Druckverlusts gegen einen durch eine Schraube (28) einstellbaren elastischen Anschlag mit einer Feder (27) erfolgt.

3. Regleruntereinheit nach Anspruch 2, dadurch gekennzeichnet, daß der Schieber (21) im Ruhezustand zwischen zwei endseitigen Kammern (29, 37) in hydraulischem Gleichgewicht gehalten ist, wobei die erste endseitige Kammer (29) die Feder (27) des Anschlags enthält und in der zweiten endseitigen Kammer (37) die Lagerung (32) der Fliehgewichte (33) des Drehzahlbegrenzers und das Organ (30, 31) für den Drehantrieb des Schiebers des Druckverlustdetektors angeordnet sind, und wobei das hydraulische Gleichgewicht dadurch erzeugt wird, daß die beiden endseitigen Kammern (29, 37) über einen axialen Kanal (21c) des Schiebers (21) auf den nieddrigen Druck Pca gesetzt werden, wobei dieser Kanal (21c) den Schieber durchdringt und über radiale Kanäle (21d, 12e) mit der zweiten Arbeitskammer (26) und einer Zwischenkammer (35) verbunden ist, in der der niedrige Druck Pac herrscht.

4. Regleruntereinheit nach Anspruch 3 für eine Reglereinheit, deren Dosierer (4) mit einem Schieber fest verbunden ist, der die Lieferung eines hohen Drucks Pam an einem Auslaßstutzen (45) ermöglicht, wenn der Dosierer seine der Ausgangsmenge Null entsprechende Position einnimmt, dadurch gekennzeichnet, daß der Auslaßstutzen (45) mit der Zwischenkammer (45) des Schiebers des Druckverlustdetektors verbunden ist, wobei in dem axialen Kanal (21c) des Schiebers (21) zwischen der zweiten Arbeitskammer (26) und der Zwischenkammer (35) ein Drosselorgan (39) so angeordnet ist, daß die Zwischenkammer (45) beim Schließen des Dosierers (4) dem hohen Druck Pam ausgesetzt und der Schieber (21) mit einer Translationsbewegung in einer einer Verringerung des Drucks Pmod entsprechenden Richtung beaufschlagt wird und das Regelventil (10) öffnet.

5. Regleruntereinheit nach einem der Ansprüche 3 oder 4, dadurch gekennzeichnet, daß der Drehzahlbegrenzer aus einer Hülse (40) besteht, die in einer zu dem Schieber (21) des Druckverlustdetektors koaxialen Bohrung (41) angeordnet ist und die einerseits eine von der Welle der Turbomaschine mit einer Drehbewegung antreibbare Verzahnung (42) und andererseits eine in der zweiten endseitigen Kammer (37) des Druckverlustdetektors angeordneten Lagerung (32) für die Fliehgewichte (33) trägt, die einen Bügel (31) für den Drehantrieb des Schiebers (21) des Druckverlustdetektors umfaßt, wobei die Hebel der Fliehgewichte (33) die Verschiebung eines Federtellers (4) bewirken, der in einer dem Endbereich des Schiebers (21) des Druckverlustdetektors zugekehrten Bohrung der Hülse (40) gleitet.

6. Regleruntereinheit nach Anspruch 5, dadurch gekennzeichnet, daß der Federteller (44) des Drehzahlbegrenzers unterhalb des Drehzahlschwellenwerts in der Bohrung der Hülse (40) eine Gleichgewichtsposition innehat zwischen einer der Wirkung der Fliehgewichte entgegenwirkenden und zwischen der Lagerung (32a) der Fliehgewichte und einer Stützfläche (44a) des Federtellers angeordneten ersten Feder (47) einerseits und einer zwischen dem Federteller (44) und einem Kolben (49) angeordnetne zweiten Feder (48) andererseits, wobei der Hub dieses Kolbens von einem durch eine Schraube (50) einstellbaren Anschlag begrenzt ist, und daß der Federteller (44) bei Erreichen des Drehzahlschwellenwerts derart verschoben ist, daß er sich an dem Schieber (21) des Druckverlustdetektors abstützt und diesen in Richtung auf eine Verringerung des Drucks Pmod drückt, wodurch das Regelventil geöffnet und die Drehzahl begrenzt wird.

7. Regleruntereinheit nach Anspruch 6, dadurch gekennzeichnet, daß zwischen der Hülse (40), dem Kolben (49) und dem Anschlag (50) des Drehzahlbegrenzers eine als Teststeuerkammer bezeichnete Kammer (51) gebildet ist, die über ein Drosselorgan (53) mit dem niedrigen Druck verbunden ist, und daß eine Leitung, die über ein Elektroventil (18) mit unter hohem Druck stehendem Fluid gespeist werden kann, in dieser Kammer mündet, um ihr vorübergehend Fluid mit dem Druck Pam zuzuführen und die auf das axiale Gleichgewicht des Federtellers (44) einwirkenden Kräfte derart zu ändern, daß der Federteller in axialer Richtung verschoben wird, um sie jenseits einer festgesetzten Drehzahl, die kleiner ist als die normalerweise zulässige Höchstdrehzahl, zu veranlassen, auch den Schieber (21) des Druckverlustdetektors zu verschieben.

**Claims**

1. Modular fuel regulating sub-assesmbly comprising a pressure drop sensor and a bob-weight controlled overspeed limiter for the speed regulating assembly of gas turbines where the sub-assembly is associated with a flowmeter (4) whose inlet is connected to the return flow side of a high pressure direct acting pump (3) delivering fuel at a pressure Pam and whose outlet delivers fuel at a pressure Pav to an injection circuit (6), the pressure drop sensor (7) being capable of detecting the variations in pressure of Pam and Pav and, under the action of a working fluid at the pressure Pam, of delivering this fluid at a pressure Pmod, being a function of the pressure drop Pam-Pav, at its outlet to a regulating valve (10) capable of acting on the flow of fuel to maintain this pressure drop at a constant value, the overspeed limiter (12) being capable of detecting the speed of rotation of the gas turbine that drives it and, under the action of the working fluid, of reducing the flow of fuel delivered to the injection circuit (6), in response to the predetermined overspeed threshold being exceeded, characterised in that the pressure drop sensor is constituted by a slider (21) axially mobile within a bore in a housing (22) and in that the overspeed limiter (12) is placed coaxially in the said housing at the end of the bore containing the slider (21) of the sensor (7) which it drives in rotation by means of the fork (31) and on which it is capable of acting, when the overspeed threshold is exceeded, in the same direction as when an increase in the pressure drop is detected by the sensor, so as to reduce the pressure Pmod at the outlet of the said sensor (7) and open the regulating valve (10).

2. Regulating sub-assembly in accordance with Claim 1 characterised in that the pressure drop sensor (7) is constituted by a slider (21) movable both longitudinally and in rotation in a bore in a housing (22) comprising a piston (21a) defining with the housing (22) two control chambers respectively (23) at a pressure Pam and the other (24) at a pressure Pav and two working chambers, one (25) at the pressure Pam and the other (26) in communication with the low pressure Pca, separated by a collar (21f) able, as it moves longitudinally, to put an outlet (73) into communication either with the first working chamber (25) at the pressure Pam, or the second working chamber (26) at the pressure Pca so as to produce the output pressure Pmod in response to a reduction or alternatively an increase in the pressure drop Pam-Pav, the movement of the slider during an increase in pressure drop taking place against a spring loaded stop (27) adjustable by means of a screw (28).

3. Regulating sub-assembly in accordance with Claim 2, characterised in that at rest, the slider (21) is hydraulically balanced between two end chambers (29, 37), a first end chamber (29) comprising the spring (27) of the stop and a second end chamber (37) in which are arranged the support (32) for the bob-weights (33) of the overspeed limiter and the drive mechanism (30, 31) that causes the rotation of the slider of the pressure drop sensor, the hydraulic equilibrium being achieved by placing the said end chambers (29, 37) at the low pressure Pca via an axial channel (21c) in the slider (21) passing right through this and connected by the radial channels (21d, 21e) to the second working chamber (26) and to an intermediate chamber (35) at the low pressure Pca.

4. Regulating sub-assembly in accordance with Claim 3 for a fuel regulating assembly of which the flowmeter (4) forms part of a slider which allows the high pressure Pam to flow through an outlet pipe (45) when the flowmeter takes up its position of zero output, a sub-assembly characterised in that the said outlet pipe (45) is connected to the intermediate chamber (35) of the slider of the pressure drop sensor, a diaphragm valve (39) being placed in the axial channel (21c) of the slider (21), between the second working chamber (26) and the intermediate chamber (35) in such a way that the said intermediate chamber is placed at the high pressure Pam when the flowmeter (4) is shut off, and the slider (21) is caused to move longitudinally into a position where the pressure Pmod is reduced and opens the regulating valve (10).

5. Regulating sub-assembly in accordance with either of Claims 3 or 4, characterised in that the overspeed limiter is constituted by a bush (40) placed in a bore (41) coaxial in relation to the slider (21) of the pressure drop sensor, the said bush having on one end a gear wheel (42) driven in rotation by the drive shaft of the gas turbine and at the other end a support (32) for the bob-weights (3), arranged in the second end chamber (37) of the pressure drop sensor, and comprising a fork (31) to drive in rotation the slider (21) of the pressure drop sensor, the levers (46) of the bob-weights (33) which cause the movement of a cup (44) sliding in a bore in the bush (40), opposite the end of the slider (21) of the pressure drop sensor.

6. Regulating sub-assembly in accordance with Claim 5, characterised in that below the overspeed threshold the cup (44) of the overspeed limiter is in a position of equilibrium with the bore in the bush (40) between, on the one hand, a first spring (47) opposing the action of the bob-weights, the said first spring being placed between the support (32a) of the bob-weights and a flanged extension (44a) of the cup and, on the other hand, a second spring (48) placed between the said cup and a piston (49) whose travel is limited by stop (50) adjustable by a screw, and in that when the overspeed threshold is reached, the displacement of the cup (44) is such that it bears against the slider (21) of the pressure drop sensor and pushes it in the direction which reduces the pressure Pmod in order to open the regulating valve and so limit the overspeeding.

7. Regulating sub-assembly in accordance with Claim 6, characterised in that a chamber (51), called a test control chamber, is formed between the bush (40), the piston (49) and the stop (50) fo the overspeed limiter, the said test control chamber being connected to the low pressure by means of a diaphragm valve (53) and in that a duct, capable of being fed with fluid at high pressure through an electrovalve (18), opens into the said chamber to supply it momentarily with fluid a the pressure Pam and alter the forces acting on the axial equilibrium of the cup (44) in order to displace axially the said cup so that, above a preset regime lower than that of the maximum normal regime, the said cup is made to displace the slider (21) of the pressure drop sensor.

FIG:1

FIG: 2

FIG:3

EP 0 278 833 B1